# EUROPEAN PATENT APPLICATION

(11) **EP 3 383 056 A1**
(43) Date of publication of application: **03.10.2018**
(21) Application number: 17163712.7
(22) Date of filing: 30.03.2017
(51) Int. Cl.: H04N 21/442, H04N 21/658, H04N 21/233, H04N 21/234, H04N 21/235, H04N 21/81, H04N 21/266

(54) **EPG BASED ON LIVE USER DATA**

(71) Applicant: Vestel Elektronik Sanayi ve Ticaret A.S., 45030 Manisa (TR)
(72) Inventor: ULUAG, Onur, 45030 Manisa (TR); BAKANOGLU, Kagan, 45030 Manisa (TR); GÜLOGLU, Seyfi, 45030 Manisa (TR)
(74) Representative: Ascherl, Andreas

(57) **Abstract**

The present invention refers to a broadcast unit (7) for broadcast distribution, in particular cloud based server means or head end. The present broadcast unit (7) preferably comprises at least an input port for inputting EPG data, an input port for inputting audience data, wherein audience data (9) comprises live user data representing a predefined user activity or user profile modifications, a processing unit for generating modified EPG (1) data by modifying the EPG data in dependency of the user data, and an output port for outputting said modified EPG data (1).

## Description

The present invention refers according to claim 1 to a broadcast unit providing a modified electronic program guide (EPG) and according to claim 14 to a method for modifying EPG data.

### Background of the Invention

Electronic program guides (EPG) are established in modern TVs and receivers. An EPG assists the audience by selecting channels in dependency of broadcasted content.

Broadcast streams have time sheet called EPG that represents channels predetermined program timing. During live broadcast streams there are unpredictable events that causes the program schedule change. Advertisements are not listed on EPG most of the time. Especially on live events advertisements are shown at random instances.

Audiences usually don't want to watch advertisements, or the program that audience is waiting for is not yet started when he/she zaps to the channel.

Here are the most common audience behavior to avoid the ads:
1. Zap the channel to another, regularly zap back to check if it is over, this requires several tries and decreases the joy of watching.
2. Zap the channel in PIP and check small screen to catch back, this requires special hardware on STB or TV. To be able to use PIP multiple RF or IP or similar tuners needed. These enable capability of showing 2 different streams at the same time using PIP. But audience himself/herself must catch mainly interested stream to switch back from advertisement to swap back the channel.
3. If media is being watched with time shifted environment, shift forward until it is over, this requires memory to store media for future watch. If it is IP stream, this storage can be on operator's data center. But audience himself/herself must shift forward manually to skip the advertisements and catch the interested media.
4. Decrease the volume, this decreases the joy of watching and distracts audience's attention from broadcast.

DE4106246 C1 discloses a device that suppresses unwanted video images such as adverts during a TV program. A signal processor receives and decodes analogue TV signals, and an A/D convertor converts the decoded signals to digital. An image store stores and reacts out the digital signals. A D/A convertor, a display, a user controlled remote control and a control which controls the device via a data bus are also included. Images selected by the user, indicating the 'start' and 'end' of the unwanted images, are written into the memory. The current signal is compared with the stored 'start' image and, when they correspond, the comparator sends an announcement to the control which prevents the image being shown until the current signal corresponds to the stored 'end' image when the image starts to be played again until the next 'start' image and so on. USE/ADVANTAGE - For automatically editing television signals by suppressing predetermined-scenes. Control is based on images corresponding to start and end of unwanted scene so it is not necessary to known exact time span of advertising. DE4106246C1 requires audience to select an image on video broadcast using RC that will be compared as an image with the broadcast stream to detect unwanted content.

Document US2010031291 discloses a content detecting device for a digital broadcast signal receiver or a recording apparatus that records the digital broadcast signal. When information in program specific information and information in an electronic program guide information in the memory contradict each other concerning presence or absence of one of a closed captioning broadcast and a data broadcast, a detecting unit causes the memory to store information indicating the detection of the commercial.

Document US 20150237411 A1 discloses a method and system for automatically scheduling television commercials within the broadcasting content have been disclosed. A program scheduling module schedules television programs (broadcasting content) with respect to specific time-slots for advertisement insertion. An advertisement scheduling module schedules television commercials to be inserted into the broadcast content. The advertisement module determines time slots in the television programs for inserting television commercials, and dynamically inserts television commercials at specific time slots within the television programs prior to broadcasting. US2015237411A1 does not enhance EPG with the detailed information of the content (name of the movie, product name of the advertisement etc.).

US 20090222853 A1 discloses an advertisement replacement system that monitors a multimedia stream containing digital television content and advertisements for indicators of objectionable advertisement content. Replacement content is substituted for all or part of an advertisement that has at least one indicator (or a threshold level) of objectionable content. Analysis of stored content may also be performed and stored objectionable content may be replaced with approved content. Blank screens, user-provided photographs, user-provided videos, advertiser-provided still images, and substitute advertisements are examples of replacement content.

Thus, US 20090222853 A1 detects pre-selected content on user-end device. And it's not done continuously for all channels. Additionally, it is run on end-user device, and content is not available to other users. Furthermore, it only detects pre-selected content at current channel, and does not process all channels.

Thus, drawbacks of the state of the art methods are:
Requirement of extra processing power on end product which increases product cost per unit. (STB/TV, Mobile Phone, PC). Audience needs to record one image from each channels' advertisement jingle. Channels may not use same image when entering and exiting advertisements. In order to detect if the advertisement session is over in the original channel while watching the substitute channel, multiple tuners are required at STB/TV, because video information from another channel must be received to compare it with the recorded image.

### Object of the Invention

It is the object of the present invention to provide an enhanced television experience, in particularly an enhanced EPG that provides more comfort for the user.

### Description of the Invention

The before mentioned object is solved according to claim 1 by a broadcast unit for broadcast distribution respectively for broadcasting of telecasts, in particular a cloud based server means or head end. The broadcast unit preferably comprises at least an input port for inputting EPG data, an input port for inputting audience data, wherein audience data comprises live user data representing a predefined user activity or user profile modifications, a processing unit for generating modified EPG data by modifying the EPG data in dependency of the user data, an output port for outputting said modified EPG data.

The present invention can be used in video broadcast or multicast systems such as Terrestrial, Cable, Satellite or IP systems where a unit at the cloud or at the head end is required to run the proposed method and the audience data are gathered from receivers such as STBs, TVs, PCs; online profiles and mobile phones of the audiences.

Thus, the present invention relates to correcting, detailing and enhancing EPG information using audio processing, video processing, text processing and more importantly audience data such as data representing: the channel watched on main display, PIP (picture in picture) window, channel zapping events, RC inactive time, volume level, online profiles of the audience etc.

This invention is beneficial, since the system is capable of cross-analyzing multiple channels to classify the content. For example: If same videos are shown at different channels or on the same channel multiple times during a day, system can detect that and classifies as advertisement. If same short video is shown many times at the same channel or at the time of program changes according to original EPG schedule, the system can detect that and classifies as an advertisement jingle.

The present invention does not require much processing power on end product side (STB/TV) since modifying of EPG is preferably carried out at a head end device or in the cloud. Thus, the processing is preferably done on server. However, it is also possible that the modified EPG is generated at the end user device, thus if it is done on STB/TV the same data might be processed by different units, in particular each STB/TV, and this increases total power consumption.

Further preferred embodiments of the present invention are subject-matter of the dependent claims and/or of the following specification parts.

User data is transferred preferably in real-time according to a further preferred embodiment of the present invention via an internet connection to the input port for inputting audience data, wherein the presence of commercials respectively advertising clips is determined in dependency of the live user data, wherein the modified EPG data comprises notifications indicating the presence of commercials.

This embodiment is beneficial since applications respectively operation system of the end user device can do but is not limited to the following possible options that are selectable by audience on the end user device, in particularly STB/TV/PC/Mobile: Decrease volume on advertisement entry and increase to previous level on exit. Zap when advertisement starts or ends to a channel which EPG-CDE system recommends according to the mood, likes and dislikes of the audience. Zap back to a channel while watching another channel, when advertisement ends. Zap back to a channel while browsing on the Internet, when advertisement ends. Get notification to mobile phone or TV on registered events (selected program on EPG) or other programs that is recommended by EPG-CDE system according to audiences' mood and online profile likes. Show personalized advertisements from Internet when advertisement starts on broadcast. Advertisement on stream is identified by the server, and audience can press a button on RC to navigate shopping page of the product to buy on TV/STB/PC/Phone.

Furthermore, the system can use history of audience activities which is the audience respectively user data to assign a weight to each data or data groups to filter out the audience or make its activities valuable.

User data comprises according to a further preferred embodiment of the present invention online profile data of at least one cloud based service, the online profile data comprises data representing one or multiple of the following features: The emotional mood of the audience, video preferences and recommendations from social media accounts, the daily routines and predictions of the daily routines of the audience such as expected go to bed time, expected TV watching duration.

Video preferences and recommendations are preferably derived from social media accounts, not necessarily be running on the receiver device, but linking audience accounts on the cloud to gather the cloud based user data; such as mobile Facebook, YouTube accounts. The proposed device, method and system preferably can accept video preferences and recommendations from social media accounts that are linked to the system. This data can be used to discover the likes of the audience. The scheduled and current recording can give some insight about the likes of the audience. The likes of the audience will preferably affect the channel zap trends of the audience. For instance, the audience will most likely continue to watch the program which he/she likes till the advertisement start and zap when the advertisement session starts.

The emotional mood of the audience is preferably gathered from mobile applications or cloud services. The inventive device, method or system processes data representing emotional moods of the audience (mood data), preferably gathered from mobile applications or cloud services as an input respectively as a part of audience data. Different emotional moods change the channel zap characteristics of the audiences. Depending on the emotional mood of the audience, the data gathered from the audiences are assigned different weights in the modified EPG.

Daily routines and predictions of the daily routines of the audience preferably comprise expected go-to-bed time information, expected TV watching duration information, etc.. The data representing daily routines and predictions of these routines of the audience is preferably gathered from mobile applications or cloud services as an input, in particularly as a part of audience data. Go-to-bed time and expected TV watching duration can change the channel zap characteristics of the audiences. Depending on these predicted daily routines the audience, the data gathered from the audiences are preferably assigned different weights in the modified EPG.

User data comprises according to a further preferred embodiment of the present invention TV usage data. TV usage data preferably comprises data representing one or multiple of the following features: The displayed channel, the channel displayed in PIP window, channel zapping events, the duration spent on the last channel, the channel zapping frequency of the audience, volume level of the receiver, the RC inactive time, receiver remote controlling applications inactive time, duration of RC differing from channel zapping, information about the audience, information about the person holding the RC, information about movements or usage of a smart remote control, favorite programs, information about current and past scheduled recording at the receiver, video preferences and recommendations from social media accounts running on the receiver device, the presence or absence of the audience in front of the receiver (this information can be gathered via PIR sensor, camera, laser sensor etc.)

Channel data representing information about the currently displayed channel, in particularly currently displayed on a main display. The channel data about the channel which is currently watched is preferably used as a reference channel and is preferably used to modify the EPG data.

PIP channel data representing the channel currently displayed on PIP window. The PIP channel data can be the intended channel to be watched by the audience and the probability of changing the channel to the PIP window's channel when the advertisement (displayed on the PIP) is over and the intended program starts or resumes is higher than switching to another channel. In case PIP channel data is used to modify the EPG data it is preferably assigned with a predefined weight, in particularly relatively more weight compared with data representing other information.

Channel zapping event data preferably represents events which most likely occur when the advertisement starts/end, TV program starts/resumes. In case channel zapping event data is used to modify the EPG data, it is preferably assigned with a predefined weight to the data used for modifying EPG.

Duration data preferably represents the duration spent on the last channel. This duration data preferably represents information that gives some insight about the length of the current program being watched and/or event changes. Different duration information from different audiences respectively users are assigned to different weights, in particular predefined weights, for modifying the EPG in case the duration data is used for modifying the EPG.

Zapping data preferably represents the channel zapping frequency of the audience. High frequency of channel zapping can be an indicator of the uncertain audience with an unstable TV watching mood. The zapping data gathered from these audiences can be assigned with a predefined weight, in particular less weight, while recognizing the program changes in the channels.

Volume level data and volume change data, in particular at the receiver. A high volume can be processed as an indicator of high audience interest in the program and conversely a low volume can be processes as an indicator of low audience interest in the program. Volume decrease can be an indicator of decreasing interest in the program and a possible start of advertisement sessions. Conversely, volume increase can be an indicator of increasing interest in the program and a possible end of advertisement sessions or a start of a program which the audience is interested in. In case the volume level data and volume change data is used for modifying the EPG a predefined weight is assigned to said data.

Presence or absence data representing the presence or absence of the audience or of at least one person in front of the receiver respectively TV respectively outputting device. This information can be gathered via PIR sensor, camera, laser sensor etc.. When there is no audience present in front of the receiver, than the event of "no channel zap" information is preferably ignored with respect to EPG modification.

RC data, in particularly representing information if the audience or how the audience is holding the RC or other receiver remote control application from smart remote controls (for example RCs can be equipped with accelerometer sensor, temperature sensor etc.) and RC or other receiver remote controlling applications inactive time (other RC usage other than channel zapping). The RC and RC mobile application preferably comprises sensor means such as accelerometer or temperature sensor etc. for detecting if the audience is holding the RC. This RC data is preferably forward to the receiver and the receiver preferably forwards this data, in particularly via internet, to the device according to the present invention. When the audience respectively user is holding the RC on his/her hand and does not zap the channel, there is more likely a no program-advertisement change in the channel. When this audience zap the channel, there is more likely a program-advertisement change in the channel. In case the RC data is used for modifying the EPG data the RC data is preferably assigned with a predefined weight, and highly preferably a relatively high weight, while detecting the program-advertisement change in the channel.

Program data representing selected programs to watch on respective EPG. This data can be used to discover the likes of the respective audience. The likes of the audience will preferably affect the channel zap trends of the audience. For instance, the audience will most likely continue to watch the program which he/she likes till the advertisement start and zap when the advertisement session starts. If audience selects a program on EPG to watch, and program's predefined schedule is about come, audience may zap to channel. If audience zaps back to previous channel it has high possibility of the program selected is not yet started on that channel and advertisement or another program continues. If audience stays on that channel after several zaps, it is an indication that the program might has started.

Recording data preferably represents information about current recording and/or the history of scheduled recordings at the receiver. This recording data preferably can be used to discover the likes of the audience. The scheduled and current recording can give some insights about the likes of the audience. The likes of the audience preferably affect the channel zap trends of the audience. For instance, the audience will most likely continue to watch the program which he/she likes till the advertisement start and zap when the advertisement session starts.

Video preferences and recommendation data from VoD (video on demand) applications such as Netflix, YouTube are running on the receiver device. This video preferences and recommendation data can be used to discover the likes of the audience. The likes of the audience preferably affect the channel zap trends of the audience. For instance, the audience will most likely continue to watch the program which he/she likes till the advertisement start and zap when the advertisement session starts.

Collective audience behavior data preferably gives additional information about the current content of a live stream. System preferably also takes into account a currently connected number of audiences. Examples of audience behaviors and its relation with the content may be:
If relatively large number of audiences selected to watch a program X on the EPG zap their channel to the channel which the program X will be streamed and they do not stay on that channel and zap to another channel may give a clue about the program X is not live on the stream. This information may be used to shift forward program X, and other audiences that also selected to program X may not be zapped to that channel. Or, if relatively large number of audiences have STB/TV which has PIP capability zap the channel to the channel that was on the PIP window instead of main window may give a clue about advertisements on the channel that was on the PIP window is finished and TV program is continues. Thus, system preferably can determine currently connected audience count to make assumptions about the relatively large number of audience threshold value. System can preferably use history of audience activities to give audiences a coefficient to filter out the audience or make its activities valuable.

User data comprises according to a further preferred embodiment of the present invention mobile device data, in particularly data related to the usage of a mobile phone, smart watch or tablet PC, the mobile device data preferably comprises data representing one or multiple of the following features: Mobile phone usage of the audience while at least one defined device visualizes broadcast signals, mobile phone usage preferably comprises phone calls or gaming or texting, or mobile phone usage of the audience while at least one defined device for visualizing broadcast signals is switched of.

Mobile phone usage data representing mobile phone usage information of the audience. When the audience uses his/her mobile phone such as having a phone call or playing a game on the mobile phone etc. the chance of a channel zapping event decreases. The "no channel zap" information gathered from the audience who uses mobile phone can be completely ignored or assigned a predefined, in particular lower, weight in case that data is used for modifying the EPG.

The processing unit operates according to a further preferred embodiment of the present invention at least an audio processing unit, a video processing unit, a user data processing unit and a text processing unit. This embodiment is beneficial since multiple sources can be analyzed and thus the overall intelligence is high.

The video processing unit processes according to a further preferred embodiment of the present invention video content of a live stream and generates video content data representing content transported by said live stream. This embodiment is beneficial since live stream content can change rapidly and therefore static information fail to adapt to new content, e.g. like new interview partners, products, etc. The video processing unit preferably analyses the content data with computer vision algorithms, preferably face recognition to match with actors and/or object and symbol detection to determine media type like advertisement jingle, movie, TV series. The inventive device preferably can compare one part or multiple parts of an images or video with internet image search results to identify objects or people in the current frame.

The audio processing unit processes according to a further preferred embodiment of the present invention audio content of the live stream and generates audio content data representing content transported by said live stream, wherein said audio content data is transferred to text to be processed by the text processing unit, the audio processing unit preferably analyzes the audio content data or the generated text for determining of media type like content, in particularly advertisement jingle, a movie or TV series, intro music. The inventive device preferably can compare audio chunks with online services to identify what movie or program the current playing audio belongs to, or match voice of people with their names.

The OCR unit processes according to a further preferred embodiment of the present invention video content data to detect text data from video. This embodiment is beneficial since written information present in video content can be made accessible.

The text processing unit processes according to a further preferred embodiment of the present invention text content of the live stream, like subtitles, which is embedded in the live stream and generates content related data. This embodiment is beneficial since said content can be made accessible. It can e.g. compare text with the subtitles of movies or lyrics of music to identify current movie or music.

The user data processing unit comprises according to a further preferred embodiment of the present invention at least one of the following units: data pre-processing unit, data storage unit, data mining unit, ANN unit, Core unit. This embodiment is beneficial since content information can be identified and/or complemented in multiple ways. The pre-processing unit preferably transfers multiple data sets into at least one format processable by the processing unit.

Thus, the present invention does not only correct or modify EPG but preferably also details and enhances it. Namely, the modified EPG respectively EPG-CDE preferably provides one or multiple of the following features: The expected delay in the EPG; the type of the current live content such as advertisement, movie, news etc.; the name of the program such as e.g. Coca Cola 330ml bottle advertisement, Late Night Show with Jimmy Fallon, Back to the Future 3; starring actors in these programs such as Elvis Presley is acting on Coca Cola 330ml bottle advertisement, Obama is the visitor of the Late Night Show with Jimmy Fallon, Back to the Future 3 is directed by Robert Zemeckis and starred by Micheal J. Fox; the corrected remaining duration of the program; extra information about the these programs, stars and products from web search results.

The above mentioned object is also solved by a method for modifying EPG data according to claim 14. Said method preferably comprises at least the steps: Providing of EPG data, in particular for multiple channels; Providing of live audience data, in particular for multiple of said channels or each of said channels; Processing the EPG data in dependency of the live audience data; Transferring the modified EPG data to broadcasting devices, in particular TVs.

Live audience data of more than 3, in particular more than 30 or more than 100 or more than 1000, users is preferably processed with respect to one channel, wherein live audience data is processed with respect to multiple channels, in particular the majority or all channels for which EPG data is available. In case the live audience data of a predefined number of users match, the respective event, e.g. presence of a commercial, is proved as valid and used for modifying the EPG.

Further benefits, goals and features of the present invention will be described by the following specification of the attached figures, in which exemplarily components of the invention are illustrated. Components of the systems, devices and methods according to the inventions, which match at least essentially with respect to their function can be marked with the same reference sign, wherein such components do not have to be marked or described multiple times with respect to said figures.

In the following the invention is just exemplarily described with respect to the attached figures.

### Brief Description of the Drawings

- Fig. 1: shows communication diagram when modified EPG is delivered over an IP Network;
- Fig. 2: shows communication diagram when modified EPG is delivered over conventional RF Broadcast; and
- Fig. 3: a block diagram illustrating multiple sources for providing content for generating the modified EPG.

### Detailed Description of the Drawings

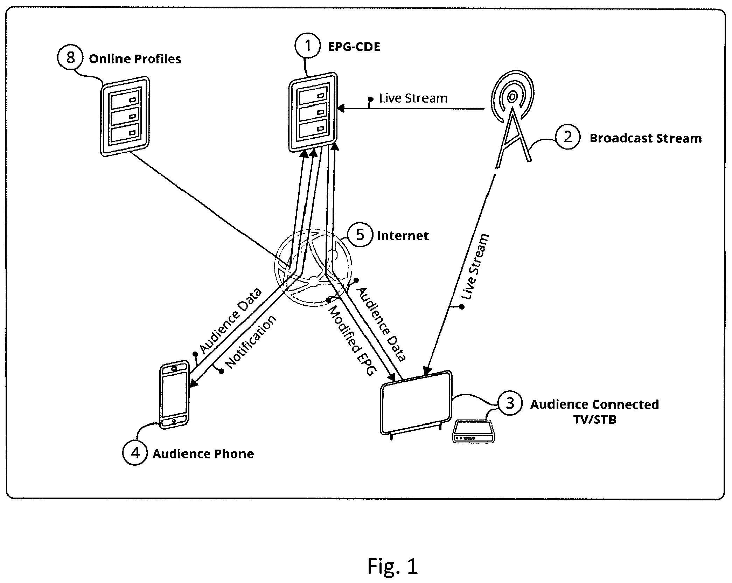

Figure 1 shows an example of a communication diagram of EPG-CDE 1 correcting, detailing and enhancing system (EPG-CDE 1 system). EPG-CDE 1 system can be performed at the head end of the broadcaster or 3^{rd} parties who are not the broadcasters. Corrected, detailed and enhanced EPG respectively modified EPG is transmitted to Audience Connected TV/STB 3.

The inventive system/device/method has five main inputs: Preferably multiple or all videos of multiple or all channels in the entire broadcast system, preferably multiple or all audios of multiple or all channels in the entire broadcast system, preferably multiple or all subtitles of multiple or all channels in the entire broadcast system, preferably multiple or all EPG information of multiple or all channels in the entire broadcast system.

Audience/user data is preferably collected from audience's /user Receivers (TV/STB) and/or mobile phones and/or online profiles.

Device for modifying EPG respectively EPG-CDE 1 preferably comprises or consists of : Video processing unit, Audio Processing unit, OCR unit together with Text processing unit, Corrected, Detailed, Enhanced EPG transmitter, Data processing unit which comprises or consist of Data pre-processing unit, Data Storage, Data Mining Unit, ANN, Core

Thus, the present solution preferably uses video processing, audio processing, text processing, multiple audience activity data, like channels the users watch on main display, channels the users watch on PIP window, channel zapping events, RC inactive time, volume level, selected programs to watch on their EPG etc. This enables the present system, device or method to be more accurate.

The present system, device or method preferably uses ANN to correct / modify EPG data, this preferably includes advertisements but not limited to. The present solution preferably does not need audience to select an image to be compared. It preferably determines itself.

In case of a cloud server solution server process all gathered data including live stream and audience data and corrects, details and enhances EPG. It sends this corrected / modified EPG information to clients, in particularly over 2 different ways: over IP network and/or over broadcast, using conventional EPG delivery. Clients that listens this information preferably take actions according to audience's choice. Thus, the inventive system, device or method utilizes the audience data to increase the precision of the proposed system, method or device.

The audience data can be but is not limited to: The channel info watched on main display; the channel watched on PIP window; the channel zapping events; the duration spent on the last channel; the channel zapping frequency of the audience; volume level of the receiver; RC or other receiver remote controlling applications inactive time (other RC usage other than channel zapping); the information which the audience or the audience is holding the RC or other receiver remote control application from smart remote controls (for example RCs can be equipped with accelerometer sensor, temperature sensor etc.); the presence or absence of the audience in front of the receiver (this information can be gathered via PIR sensor, camera, laser sensor etc.); selected programs to watch on their EPG; current and the history of scheduled recording at the receiver; video preferences and recommendations from VoD applications such as Netflix, YouTube running on the receiver device; video preferences and recommendations from social media accounts (not necessarily be running on the receiver device, linking audience accounts on the cloud is enough) such as mobile Facebook, YouTube accounts; the emotional mood of the audience which can be gathered from mobile applications or cloud services; the daily routines and predictions of the daily routines of the audience such as expected go to bed time, expected TV watching duration; mobile phone usage information of the audience (for example if the audience is having a phone call or playing a game on the mobile phone etc. which will decrease the chance of the channel zapping event.)

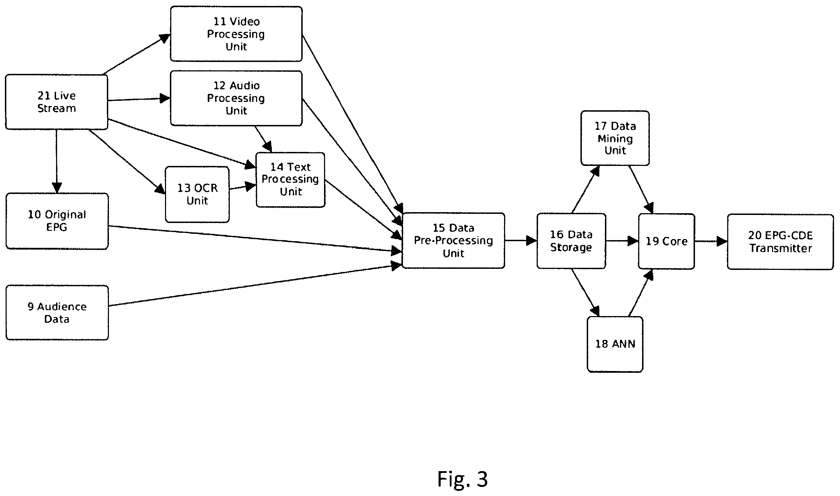

EPG-CDE 1 unit has multiple tuners that receive video, audio, text and EPG data from Broadcast Stream 2. EPG-CDE 1 unit has ANN system as described in Figure 3. EPG-CDE 1 unit corrects original EPG data received from Broadcast Stream 2 and delivers corrected EPG data to Audience Connected TV/STB 3 over IP network.

Broadcast Stream 2 includes video, audio, text and EPG data in it. It is usually broadcasted over terrestrial, cable, satellite, Internet or IPTV networks.

Audience Connected TV/STB 3 is a connected device that stores and transmits data about audience activities like channel watched on main display, channel watched on PIP window, channel zapping events, RC inactive time, volume level, selected programs to watch on their EPG etc. It receives live broadcast stream and decodes video, audio, text and EPG from Broadcast Stream 2. It receives corrected EPG data from EPG-CDE 1 unit over IP network.

Audience Phone 4 is device that is connected to IP network over WiFi or GSM network. It receives data from and provides data to EPG-CDE 1 unit and shows notifications to audience.

Online Profiles 8 are online profiles and online accounts that are created and used by the audience. These profiles include preferences and rating history of the audience such as song, video, movies, social media usage.

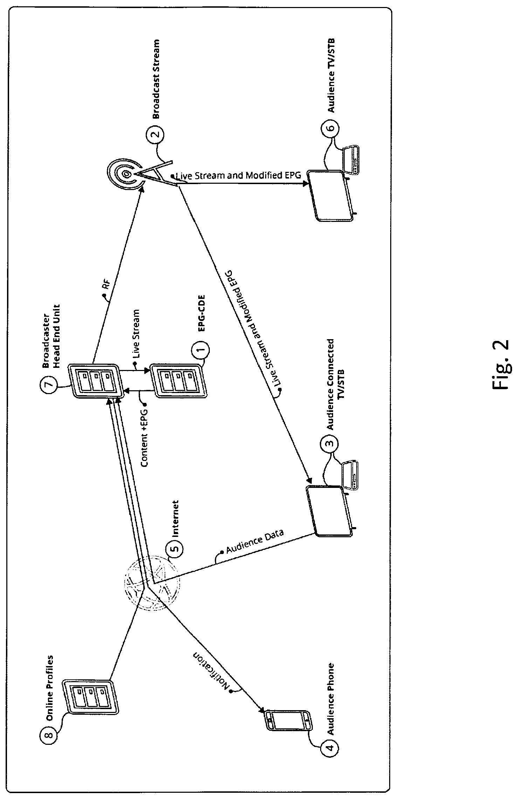

Figure 2 shows an example of a communication diagram of EPG-CDE 1 correcting, detailing and enhancing system (EPG-CDE 1 system). EPG-CDE 1 system can be performed at the head end of the broadcaster or 3rd parties who are not the broadcasters. Corrected, detailed and enhanced EPG is transmitted to all receivers both audience connected TV/STB 3 and audience TV/STB 6 via correcting EPG of the broadcast stream.

EPG-CDE 1 unit is the same unit which is described with respect to fig. 1.

Broadcaster Head End Unit 7 preferably transmits corrected EPG data to audience connected TV/STB 3 over IP network and audience TV/STB 6 over RF broadcast, sends notifications to Audience Phone 4 over IP network.

In the case of corrected/modified EPG is delivered by broadcast, as stated in Figure 2, there is no need for tuners in the system. Furthermore, this process can be done e.g. in the powerful head-end unit without using external hardware.

Figure 3 shows an example of a general block diagram of the inventive device, method or system for providing or generating modified EPG data respectively EPG-CDE 1.

Live Stream 21 is the actual content of video, audio, text and EPG.

Audience Data 9 is the user data which can be but not limited to:
- The channel info watched on main display
- The channel watched on PIP window
- The channel zapping events
- The duration spent on the last channel
- The channel zapping frequency of the audience
- Volume level of the receiver
- RC or other receiver remote controlling applications inactive time (other RC usage other than channel zapping)
- The information which the audience or the audience is holding the RC or other receiver remote control application from smart remote controls (for example RCs can be equipped with accelerometer sensor, temperature sensor etc.)
- The presence or absence of the audience in front of the receiver (this information can be gathered via PIR sensor, camera, laser sensor etc.)
- Selected programs to watch on their EPG
- Current and the history of scheduled recording at the receiver
- Video preferences and recommendations from VoD applications such as Netflix, YouTube running on the receiver device
- Video preferences and recommendations from social media accounts (not necessarily be running on the receiver device, linking audience accounts on the cloud is enough) such as mobile Facebook, YouTube accounts
- The emotional mood of the audience which can be gathered from mobile applications or cloud services
- The daily routines and predictions of the daily routines of the audience such as expected go to bed time, expected TV watching duration.
- Mobile phone usage information of the audience (for example if the audience is having a phone call or playing a game on the mobile phone etc. which will decrease the chance of the channel zapping event.)

Original EPG 10 is the actual EPG data that live stream includes.

Data Pre-Processing Unit 15 is preferably responsible of Data Storage 16 is responsible of storing data by examining the previous data and detection of same data is already is in the storage or not. It makes relations between data and channels.

Data Mining Unit 17 is preferably responsible of detecting content information using stored data in the Data Storage 16.

ANN 18 is preferably responsible of processing all the inputs to determine time related activities of audiences and generates information about audience-content relationship.

Core 19 Unit preferably analyses that information with machine learning algorithms and web search to correct original EPG.

EPG-CDE Transmitter 20 sends corrected respectively modified EPG to audience connected TV/STB 3, Audience Phone 4, Audience TV/STB 6 or Broadcaster Head End Unit 7 using IP network or another protocol.

The present system is preferably a cloud based system, capable of video processing, audio processing, text processing and machine learning, to classify the current content on media and correct, detail and enhance the EPG while media stream continues.

Audiences' Connected TV/STB 3 sends data about their activity like channel watched on main display, channel watched on PIP window, channel zapping events, RC inactive time, volume level, selected programs to watch on their EPG etc. to server to examine this information for more accurate recognition. Server process all gathered data including live stream and audience data and corrects EPG. It sends this corrected EPG information to clients over 2 different ways:
- over IP network.
- over broadcast, using conventional EPG delivery.

Clients that listens this information preferably take actions according to audience's choice.

In the case of corrected respectively modified EPG is delivered by broadcast, as stated in Figure 2, there is no need for tuners in the system. Furthermore, this process can be done in the powerful head-end unit without using external hardware.

Thus, the present invention refers to a broadcast unit for broadcast distribution, in particular cloud based server means or head end, at least comprising an input port for inputting EPG data, an input port for inputting audience data, wherein audience data comprises live user data representing a predefined user activity or user profile modifications, a processing unit for generating modified EPG data by modifying the EPG data in dependency of the user data, an output port for outputting said modified EPG data.

Unlike STB/TVs which have usually single tuner, the present device for modifying EPG respectively for providing EPG-CDE preferably has multiple tuners, in particularly as much as number of channels on broadcast stream, at single location for the case shown in Figure 1, or no tuner at all for the case shown in Figure 2. Listening to multiple channels, in particular all channels, provides more data than just one single channel for analyzing the type of video.

Thus, the present invention refers to a broadcast unit 7 for broadcast distribution, in particular cloud based server means or head end. The present broadcast unit 7 preferably comprises at least an input port for inputting EPG data, an input port for inputting audience data, wherein audience data 9 comprises live user data representing a predefined user activity or user profile modifications, a processing unit for generating modified EPG 1 data by modifying the EPG data in dependency of the user data, and an output port for outputting said modified EPG data 1.

### List of reference numbers

- 1: modified EPG
- 2: broadcast stream
- 3: audience connected TV/STB
- 4: audience phone
- 5: internet
- 6: audience TV/STB
- 7: broadcast head end unit
- 8: online profiles
- 9: audience data
- 10: original EPG
- 11: video processing unit
- 12: audio processing unit
- 13: OCR unit
- 14: text processing unit
- 15: data pre-processing unit
- 16: data storage
- 17: data mining unit
- 18: ANN
- 19: Core
- 20: modified EPG transmitter
- 21: live stream

- EPG: Electronic Program Guide
- EPG-CDE: Electronic Program Guide Correction, Detailing and Enhancement
- RC: Remote Controller
- STB: Set-Top-Box
- TV: Television
- PIP: Picture in Picture
- RF: Radio Frequency
- IP: Internet Protocol
- TS: Transport Stream
- PC: Personal Computer
- OCR: Optical Character Recognition
- ANN: Artificial Neural Network
- PIR: Passive Infrared Sensor
- VoD: Video on Demand
- GSM: Global System for Mobile Communications

## Claims

1. Broadcast unit (7) for broadcast distribution, in particular cloud based server means or head end device,
at least comprising
an input port for inputting EPG data,
an input port for inputting audience data, wherein audience data (9) comprises live user data representing a predefined user activity or user profile modifications,
a processing unit for generating modified EPG (1) data by modifying the EPG data in dependency of the user data,
an output port for outputting said modified EPG data (1).

2. Broadcast unit according to claim 1,
**characterized in that**
live user data is transferred in real-time via an internet connection (5) to the input port for inputting audience data,
wherein the presence of commercials is determined in dependency of the live user data,
wherein the modified EPG (1) data comprises notifications indicating the presence of commercials.

3. Broadcast unit according to claim 1 or claim 2,
**characterized in that**
user data comprises online profile data (8) of at least one cloud based service,
the online profile data (8) comprises data representing one or multiple of the following features:
the emotional mood of the audience,
video preferences and recommendations from social media accounts,
the daily routines and predictions of the daily routines of the audience such as expected go to bed time, expected TV watching duration.

4. Broadcast unit according to any of the proceeding claims,
**characterized in that**
user data comprises TV usage data.

5. Broadcast unit according to claim 4,
**characterized in that**
TV usage data comprises data representing one or multiple of the following features:
the displayed channel, the channel displayed in PIP window, channel zapping events, the duration spent on the last channel, the channel zapping frequency of the audience, volume level of the receiver, the RC inactive time, receiver remote controlling applications inactive time, duration of RC differing from channel zapping, information about the audience, information about the person holding the RC, information about movements or usage of a smart remote control, favorite programs, information about current and past scheduled recording at the receiver, video preferences and recommendations from social media accounts running on the receiver device, the presence or absence of the audience in front of the receiver.

6. Broadcast unit according to any of the proceeding claims,
**characterized in that**
user data comprises mobile device data, in particularly data related to the usage of a mobile phone, smart watch or tablet PC,
the mobile device data comprises data representing one or multiple of the following features:
mobile phone usage of the audience while at least one defined device visualizes broadcast signals, mobile phone usage preferably comprises phone calls or gaming or texting,
or
mobile phone usage of the audience while at least one defined device for visualizing broadcast signals is switched of.

7. Broadcast unit according to any of the proceeding claims,
**characterized in that**
the processing unit operates at least an audio processing unit, a video processing unit, a user data processing unit and a text processing unit.

8. Broadcast unit according to claim 7,
**characterized in that**
the video processing unit processes video content of a live stream and generates video content data representing content transported by said live stream.

9. Broadcast unit according to claim 8,
**characterized in that**
the video processing unit analyses the content data with computer vision algorithms, preferably face recognition to match with actors and/or object and symbol detection to determine media type like advertisement jingle, movie, TV series.

10. Broadcast unit according to any of claims 7 to 9,
**characterized in that**
the audio processing unit processes audio content of the live stream and generates audio content data representing content transported by said live stream, wherein said audio content data is transferred to text to be processed by the text processing unit,
the audio processing unit preferably analyzes the audio content data or the generated text for determining of media type like content, in particularly advertisement jingle, a movie or TV series, intro music.

11. Broadcast unit according to any of claims 7 to 10,
**characterized in that**
the OCR unit processes video content data to detect text data from video.

12. Broadcast unit according to any of claims 7 to 11,
**characterized in that**
the text processing unit processes text content of the live stream, like subtitles, which is embedded in the live stream and generates content related data.

13. Broadcast unit according to claim 7,
**characterized in that**
the user data processing unit comprises at least one of the following units: data pre-processing unit, data storage unit, data mining unit, ANN unit, Core unit.

14. Method for modifying EPG data at least comprising the steps:
Providing of EPG data
Providing of live audience data
Processing the EPG data in dependency of the live audience data,
Transferring the modified EPG data to broadcasting devices, in particular TVs.

15. Method according to claim 14,
**characterized in that**
live audience data of more than 3, in particular more than 30 or more than 100, users is processed with respect to one channel, wherein live audience data is processed with respect to multiple channels, in particular the majority or all channels for which EPG data is available.
